# EUROPEAN PATENT APPLICATION

(11) **EP 2 600 432 A1**
(43) Date of publication of application: **05.06.2013**
(21) Application number: 12152664.4
(22) Date of filing: 26.01.2012
(51) Int. Cl.: H01M 2/02, H01M 2/12

(54) **Lithium ion battery**

(30) Priority: 02.12.2011 CN 201110395179; 02.12.2011 CN 201110395177; 02.12.2011 CN 201110395176
(71) Applicant: Suzhou Golden Crown New Energy Co., Ltd., Suzhou City, Jiangsu (CN); Golden Crown New Energy (HK) Limited, Kowloon, Hong Kong (CN)
(72) Inventor: Huang, Jen-Chin, Suzhou City (CN); Song, Huabin, Suzhou City (CN)
(74) Representative: O'Callaghan, Robert James

(57) **Abstract**

A lithium ion battery (100) includes a cell assembly (20), a casing (10) containing the cell assembly, a cap assembly and electrolyte filling in the casing. The cell assembly has stacked electrode plates (21, 22) with separators (23) disposed between neighbored electrode plates. The casing has a bottom wall (11), a number of side walls extending vertically from the bottom wall, and a receiving space defined by the bottom wall and the number of side walls with an opening opened outwards. The cap assembly includes a cap plate (40) covering the opening and encapsulating the cell assembly in the casing. A recessed structure (121) is formed on the side wall of the casing.

## Description

The present invention relates generally to a battery, and more particularly to a rechargeable lithium ion battery.

Generally, rechargeable batteries can be charged or discharged numerous times in comparison with conventional primary batteries which cannot be charged. Nowadays, lithium (Li) batteries, lithium ion batteries, and Ni-MH batteries are widely used as rechargeable battery. The rechargeable battery is usually classified into a liquid electrolyte battery and a polymer electrolyte battery based on the electrolyte used in the battery. Typically, the lithium ion battery is a liquid electrolyte battery. In the art, the lithium ion battery is manufactured in various shapes, such as cylindrical, rectangular, and pouch shapes.

Usually, the shape of the lithium ion battery has a great effect upon the design and manufacturing of the cell structure. For example, the cylindrical battery generally has a winded cell core structure, while, for a rectangular shape battery, a plurality of stacked electrode plates constitute a cell core structure. Currently, there are several methods to manufacture the stacked electrode plates or cell core structure for rectangular battery. For example, Chinese Patent No. 101485033 discloses a Zigzag method. Chinese Patent No. 101174681 discloses an insulator-bagging method. Chinese Patent No. 101405911 discloses an insulator-sectioning method.

For the Zigzag method, the positive pole and the negative pole are formed by plating positive/negative material on the plate and employing electrode ears connecting thereto, respectively. A separator will be positioned between neighbored two plates for insulation purposes. If the positive electrode ear and the negative electrode ear are facing to a same direction, corresponding terminals, which are attached to a cap of the battery, will be located at the same side. Consequently, the designs of insulation and connection for the cap and the cell core structure of the battery are relatively important.

Furthermore, in the lithium ion battery, when overheating or overcurrent, the battery components, such as a casing housing the cell core, is easily subject to undesired explosion or damage. If a cylindrical canned battery is used, a cap plate for encapsulating a battery casing naturally has a function of preventing overheating or overcurrent. However, when a rectangular canned battery is used, the cap plate does not have such a safety function. Therefore, in the conventional rectangular canned battery, a separate safety device or unit, such as a protection circuit board in the casing, is used together with the cell core and other components. The separate safety device is usually physically and electrically attached to the cap plate. However, it is unstable and complex to fix the separate safety device adhered or welding to the cap plate.

Therefore, a heretofore unaddressed need exists in the art to address the aforementioned deficiencies and inadequacies.

In one aspect of the present invention, a lithium ion battery comprises a cell assembly, a casing containing the cell assembly, a cap assembly and electrolyte filling in the casing. The cell assembly comprises stacked electrode plates with separators disposed between neighbored electrode plates. The casing has a bottom wall, a plurality of side walls extending vertically from the bottom wall, and a receiving space defined by the bottom wall and the plurality of side walls with an opening opened outwards. The cap assembly comprises a cap plate covering the opening and encapsulating the cell assembly in the casing.

In another aspect of the present invention, a lithium ion battery includes a cell assembly, a casing, a cap assembly, and electrolyte. The cell assembly includes stacked electrode plates with separators disposed between neighbored electrode plates. The casing has a bottom wall, a plurality of side walls extending vertically from the bottom wall, and a receiving space defined by the bottom wall and the plurality of side walls with an opening opened outwards, and the cell assembly is housed in the receiving space. The cap assembly includes a cap plate covering the opening and encapsulating the cell assembly in the casing. The electrolyte is filled within the casing. At least one of the side walls is provided with at least one recess recessed from an outer surface thereof, and the at least one recess has at least two corners in a cross-section thereof.

In one embodiment, the at least one recess is positioned adjacent to an interconnection line where neighbored two side walls are connected. In a further embodiment, the at least one recess is positioned adjacent to the opening of the casing. Further, a distance between the at least one recess and the opening may be no larger than one quarter of a height of the casing. In yet a further embodiment, the at least one recess is positioned adjacent to the bottom wall of the casing. Further, a distance between the at least one recess and the bottom wall may be no larger than one quarter of a height of the casing.

In one embodiment, a residual thickness of the casing at the corner is less than other part of the recess. Further, the residual thickness can be about 0.1 mm-0.15mm, a length of the at least one recess can be about one third to half of a width of the at least one side wall, and a width of the at least one recess can be about 3mm-5mm.

In one embodiment, at least one recess has a U-shape cross section. In another embodiment, the at least one recess is a linear recess. In yet another embodiment, the at least one recess has an S-shape. In another embodiment, the plurality of side walls includes two parallel side walls, each of the parallel side wall having the recess. Further, the recesses at the parallel side walls can be positioned at different planes.

In yet another aspect of the present invention, a lithium ion battery includes a cell assembly, a casing, a cap assembly, electrolyte, and a recessed structure. The cell assembly includes stacked electrode plates with separators disposed between neighbored electrode plates. The casing has a bottom wall, a side walls extending from the bottom wall, and a receiving space defined by the bottom wall and the side wall with an opening opened outwards. The cell assembly is housed in the receiving space. The cap assembly includes a cap plate covering the opening and encapsulating the cell assembly in the casing. The electrolyte is filled within the casing. The recessed structure is formed on the side wall, and the recessed structure has a residual thickness less than periphery region of the casing.

In one embodiment, the recessed structure has a U-shape cross section. Further, the recessed structure may have at least two corners.

In a further embodiment, the recessed structure is positioned adjacent to the opening, and wherein a distance between the recessed structure and the opening is no larger than one quarter of a height of the casing. In another embodiment, the recessed structure is positioned adjacent to the bottom wall, and a distance between the recessed structure and the bottom wall is no larger than one quarter of height of the casing.

These and other aspects of the present invention will become apparent from the following description of the preferred embodiment taken in conjunction with the following drawings, although variations and modifications therein may be effected without departing from the spirit and scope of the novel concepts of the disclosure.

The accompanying drawings illustrate one or more embodiments of the invention and together with the written description, serve to explain the principles of the invention. Wherever possible, the same reference numbers are used throughout the drawings to refer to the same or like elements of an embodiment, and wherein:
FIG. 1 is a perspective view of a lithium ion battery in accordance with the present invention;
FIG. 2 is a partially exploded, perspective view of the lithium ion battery without a casing thereof, according to one embodiment of the present invention;
FIG. 3a is a side plan view of a casing according to one embodiment of the present invention;
FIG. 3b is a perspective view of the casing of FIG. 3a;
FIG. 4a is a schematic view showing a cross section of a recessed structure of the casing according to one embodiment of the present invention; and
FIG. 4b is a schematic view showing a cross section of the recessed structure of the casing according to another embodiment of the present invention.

The present invention will now be described more fully hereinafter with reference to the accompanying drawings, in which exemplary embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "comprising," or "includes" and/or "including" or "has" and/or "having" when used herein, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

As used herein, "around", "about" or "approximately" shall generally mean within 20 percent, preferably within 10 percent, and more preferably within 5 percent of a given value or range. Numerical quantities given herein are approximate, meaning that the term "around", "about" or "approximately" can be inferred if not expressly stated.

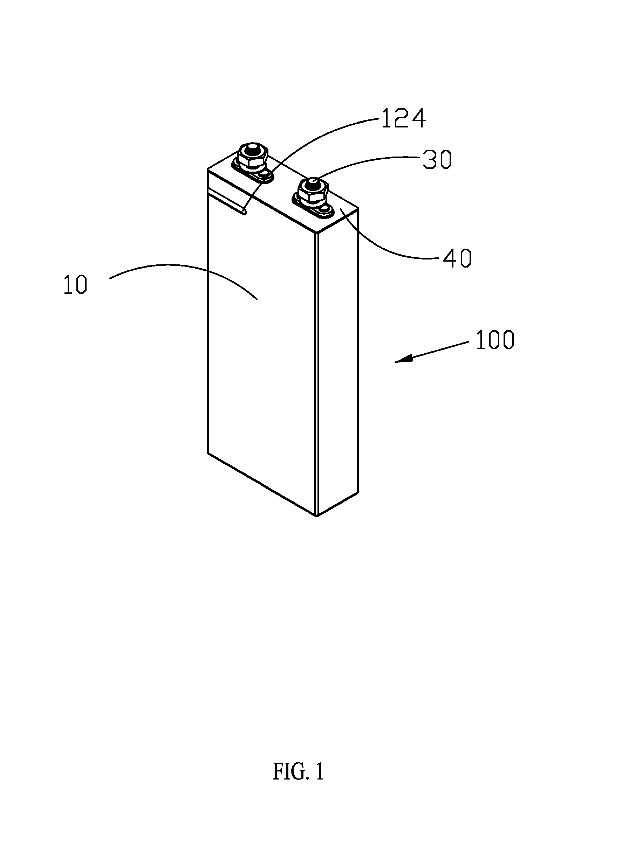

The description will be made as to the embodiments of the present invention in conjunction with the accompanying drawings in FIGS. 1-4. In accordance with the purposes of this invention, as embodied and broadly described herein, this invention, in one aspect, relates to a lithium ion battery.

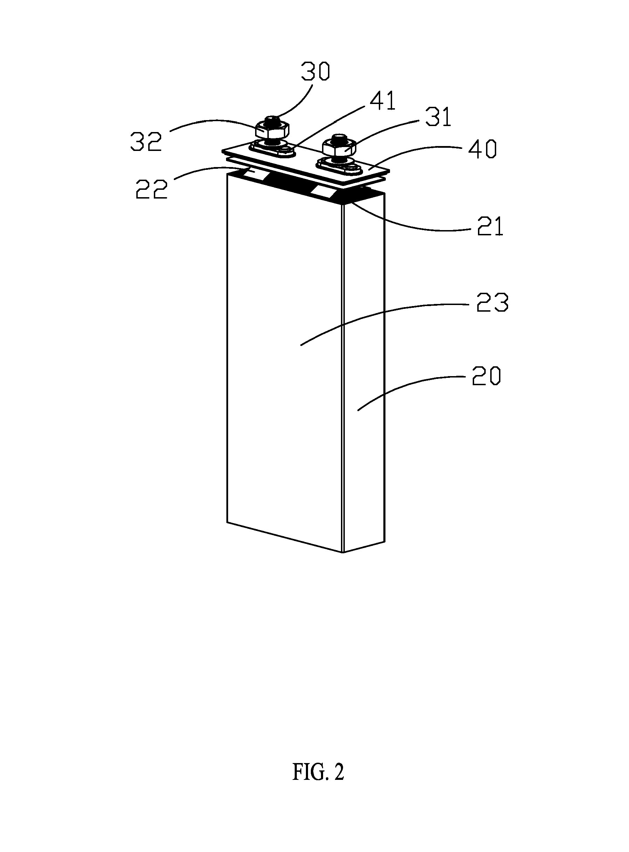

Referring to FIGS. 1 and 2, a lithium ion battery 100 is shown according to one embodiment of the present invention, which is usable for a power source of an external device. The lithium ion battery 100 comprises a casing 10, a cell assembly 20 housed in the casing 10, a pair of electrode terminals 30 and a cap assembly assembled to the casing 10. The electrolyte is filled within the casing 10. The cap assembly includes a cap plate 40 covering a top side or a top opening defined in the casing 10. The cell assembly 20 comprises a plurality of positive electrode plates 21 and a plurality of negative electrode plates 22. The electrode plates 21 and 22 are stacked from each other with a separator 23 disposed between each two neighbored electrode plates. The pair of electrode terminals 30 includes a positive terminal 31 and a negative terminal 32. Both the positive terminal 31 and the negative terminal 32 are composed by a screw and a nut. The positive terminal 31 electrically connects with the positive electrode plates 21 and the negative terminal 32 electrically connects with the negative electrode plates 22. The cap plate 40 defines through holes 41 for correspondingly receiving the terminals 30.

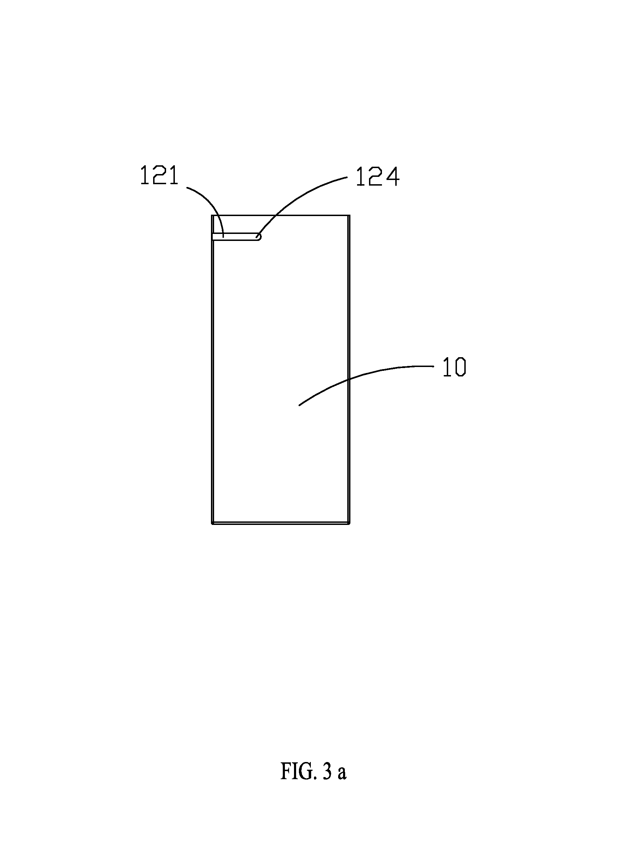

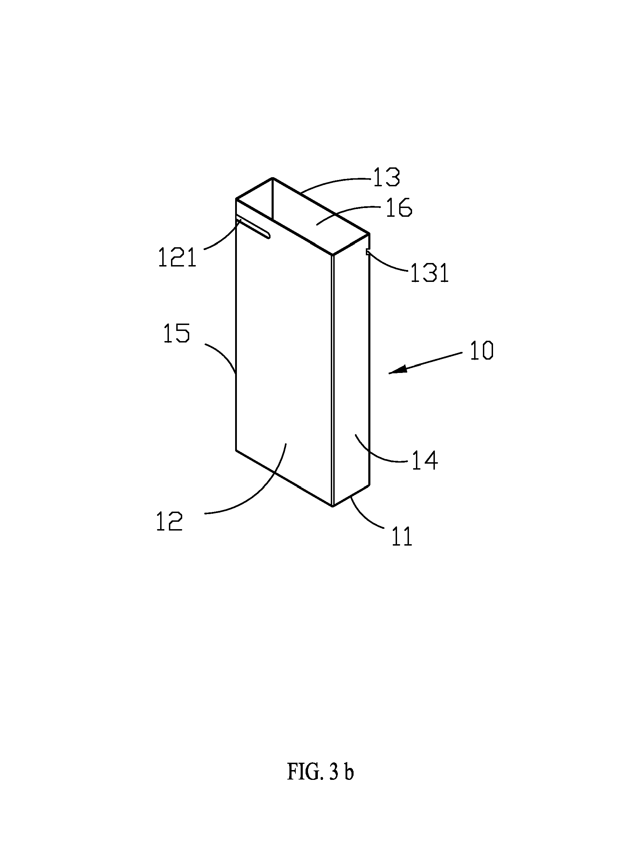

Referring to FIGS. 3a and 3b, the casing 10 comprises a bottom wall 11, a plurality of side walls extending from the bottom wall 11, and a receiving space (not labeled) surrounded by the walls. The plurality of side walls includes a first side wall 12, a second side wall 13, a third side wall 14, and a fourth side wall 15. The first side wall 12 is parallel to the second side wall 13 and the third side wall 14 is parallel to the fourth side wall 15. The casing 10 defines a top opening 16 opened outwards and communicating with the receiving space. The cap plate 40 of the cap assembly covers the top opening 16 and encapsulates the cell assembly and the electrolyte in the receiving space of the casing 10.

At the first side wall 12 of the casing 10, a recessed structure or a recess 121 is provided on an outer surface thereof. The recess 121 is positioned adjacent to an interconnecting line where the first side wall 12 connects with the fourth side wall 15. A cutout (not labeled) is therefore formed. In this preferred embodiment, such a recessed structure is also provided on an outer surface of the second side wall 13. Similarly, the recess 131 is positioned adjacent to an interconnecting line where the second side wall 13 and the third side wall 14 are connected. Although only two recessed structure are disclosed in this embodiment, one or more recesses can also be applicable in other embodiments.

As shown in FIGS. 3a and 3b, the recesses 121 and 131 are located adjacent to the top opening 16 of the casing10. A distance between the recess 121 and 131 and the top opening 16 is no larger than one quarter of a height of the casing 10. In other embodiments, the recess can be located adjacent to the bottom wall 11. Similarly, a distance between the recess 121 and 131 and the bottom wall 11 is no larger than one quarter of a height of the casing 10. In this preferred embodiment, a length of the recess 121 is about one third or a half of a width of the first side wall 12, and a width of the recess 121 is about 3mm-5mm. The recess 131 recessed in the second side wall 13 has the same size. The residual thickness of the recess 121 and 131 is about 0.1 mm-0.15mm, which is less than other part of the casing 10.

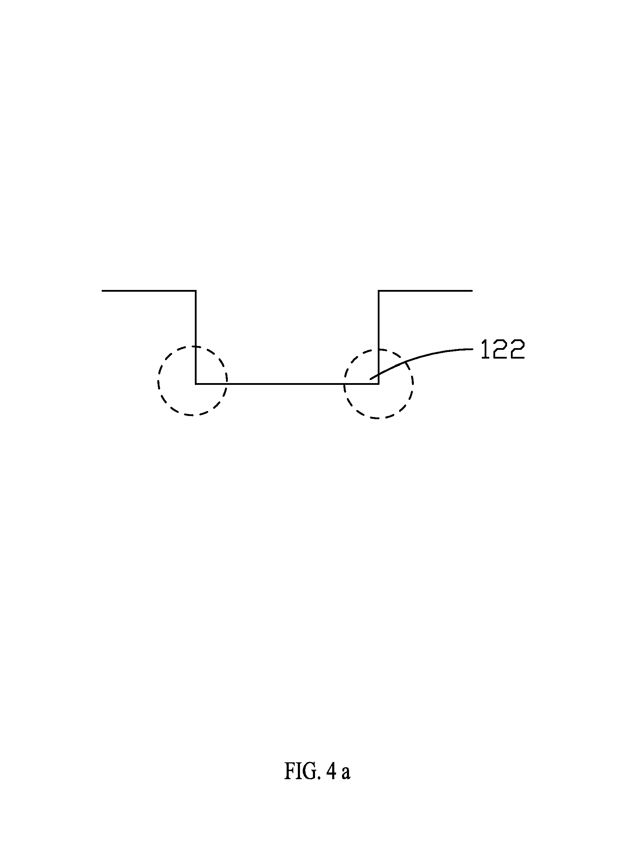

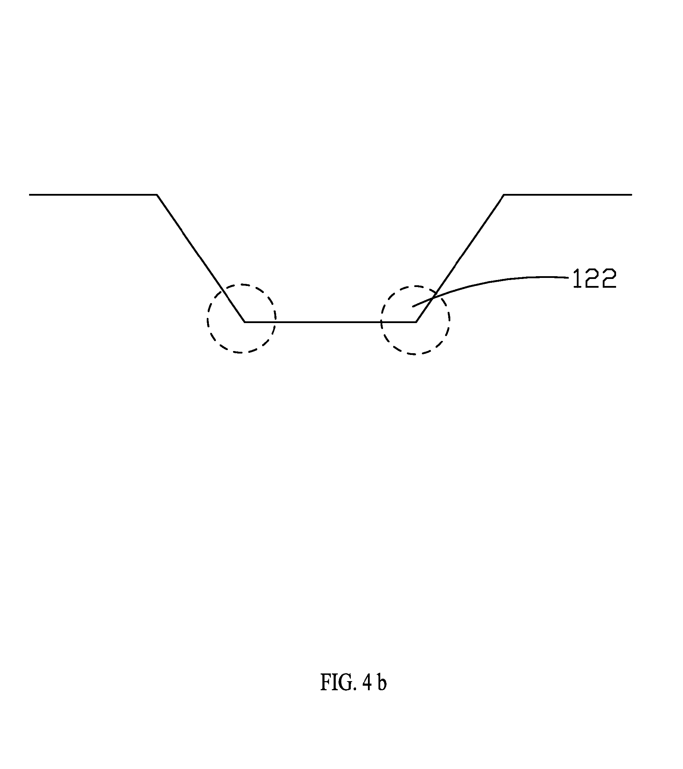

Turning to FIG. 4a, in this embodiment, the recessed structure 121 has a U-shape cross section, which has a pair of corners 122. The corner 122 can have a right angle, an acute angle or an obtuse angle as shown in FIG. 4b. The recess 121 can be a linear shape, S-shape, or waves shape, etc. Referring back to FIG. 1, there is a chamfer 124 defined in the recessed structure 121 of the casing 10. The chamfer 124 has an arc shape. The shapes of the chamfer 124 can be various according to different application environment.

When the battery is expanding due to overheating or overcurrent, the recessed structure is easily to be opened for the stress being concentrated thereto. Subsequently, the safety of the battery is assured. Therefore, the location and the size of the recessed structure are relatively important.

The foregoing description of the exemplary embodiments of the invention has been presented only for the purposes of illustration and description and is not intended to be exhaustive or to limit the invention to the precise forms disclosed. Many modifications and variations are possible in light of the above teaching.

The embodiments were chosen and described in order to explain the principles of the invention and their practical application so as to activate others skilled in the art to utilize the invention and various embodiments and with various modifications as are suited to the particular use contemplated. Alternative embodiments will become apparent to those skilled in the art to which the present invention pertains without departing from its spirit and scope. Accordingly, the scope of the present invention is defined by the appended claims rather than the foregoing description and the exemplary embodiments described therein.

It is to be understood, however, that even though numerous, characteristics and advantages of the present invention have been set forth in the foregoing description, together with details of the structure and function of the invention, the disclosed is illustrative only, and changes may be made in detail, especially in matters of number, shape, size, and arrangement of parts within the principles of the invention to the full extent indicated by the broadest general meaning of the terms in which the appended claims are expressed.

## Claims

1. A lithium ion battery (100), comprising:
a cell assembly (20) comprising stacked electrode plates (21, 22) with
separators (23) disposed between neighbored electrode plates;
a casing (10) having a bottom wall (11), a plurality of side walls extending
vertically from said bottom wall, and a receiving space defined by said bottom wall and said plurality of side walls with an opening opened outwards, said cell assembly being housed in said receiving space;
a cap assembly comprising a cap plate (40) covering said opening and
encapsulating said cell assembly in said casing; and
electrolyte filling within said casing;
wherein at least one of said side walls is provided with at least one recess (121) recessed from an outer surface thereof; and
wherein said at least one recess has at least two corners in a cross-section thereof.

2. The lithium ion battery as claimed in claim 1, wherein said at least one recess is positioned adjacent to an interconnection line where neighbored two side walls are connected.

3. The lithium ion battery as claimed in claim 1 or claim 2, wherein said at least one recess is positioned adjacent to said opening of said casing.

4. The lithium ion battery as claimed in claim 3, wherein a distance between said at least one recess and said opening is no larger than one quarter of a height of said casing.

5. The lithium ion battery as claimed in claim 1 or claim 2, wherein said at least one recess is positioned adjacent to said bottom wall of said casing.

6. The lithium ion battery as claimed in claim 5, wherein a distance between said at least one recess and said bottom wall is no larger than one quarter of a height of said casing.

7. The lithium ion battery as claimed in any of claims 1 to 6, wherein a residual thickness of said casing at said corner is less than that at the other part of said recess.

8. The lithium ion battery as claimed in claim 7, wherein said residual thickness is about 0.1 mm-0.15mm.

9. The lithium ion battery as claimed in any of claims 1 to 8, wherein a length of said at least one recess is about one third to half of a width of said at least one side wall.

10. The lithium ion battery as claimed in any of claims 1 to 9, wherein a width of said at least one recess is about 3mm-5mm.

11. The lithium ion battery as claimed in any of claims 1 to 10, wherein said at least one recess has a U-shape cross section.

12. The lithium ion battery as claimed in any of claims 1 to 10, wherein said at least one recess is a linear recess.

13. The lithium ion battery as claimed in any of claims 1 to 10, wherein said at least one recess has an S-shape.

14. The lithium ion battery as claimed in any of claims 1 to 13, wherein said plurality of side walls includes two parallel side walls, each of said parallel side wall having said recess.

15. The lithium ion battery as claimed in claim 14, wherein said recesses at said parallel side walls are positioned at different planes.
